# FASCICULE DE BREVET EUROPEEN

(11) **EP 0 362 005 B1**
(45) Date de publication et mention de la délivrance du brevet: **09.06.1993**
(21) Numéro de dépôt: 89402460.3
(22) Date de dépôt: 08.09.1989
(51) Int. Cl.: G21C 3/335

(54) **Procédé et dispositif d'extraction d'un manchon de blocage d'un tube-guide démontable d'un assemblage combustible d'un réacteur nucléaire**
Verfahren und Vorrichtung zum Herausziehen von Blockierhülsen aus Führungsrohren von zerlegbaren Kernreaktor-Brennstabbündeln
Method and device to extract locking sleeves from guide tubes of reconstituable nuclear reactor fuel assemblies

(30) Priorité: 19.09.1988 FR 8812208
(43) Date de publication de la demande: 04.04.1990
(73) Titulaire: FRAMATOME, 92400 Courbevoie (FR); COGEMA, F-78141 Velizy Villacoublay (FR)
(72) Inventeur: Petit, Bernard, F-69230 Saint Genis Laval (FR)
(74) Mandataire: Bouget, Lucien

(56) Documents cités:
- EP-A- 0 007 251
- EP-A- 0 140 588
- EP-A- 0 180 166
- EP-A- 0 223 342

## Description

L'invention concerne un procédé et un dispositif d'extraction d'un manchon de blocage d'un tube-guide démontable d'un assemblage combustible d'un réacteur nucléaire refroidi par de l'eau légère.

Les réacteurs nucléaires refroidis à l'eau et en particulier les réacteurs nucléaires à eau sous pression comportent des assemblages constitués par un faisceau de crayons combustibles de grande longueur disposés parallèlement les uns aux autres et maintenus dans une ossatture formée par des tubes-guides, des entretoises et deux embouts d'extrémité. Les tubes-guides sont disposés dans la direction longitudinale de l'assemblage et sont reliés à des entretoises transversales régulièrement espacées suivant la longueur de l'assemblage.

Les tubes-guides sont également reliés à chacune de leurs extrémités à l'un ou à l'autre de deux embouts constituant des pièces de rigidification et de fermeture de l'assemblage.

Les crayons combustibles de l'assemblage constituent un faisceau dans lequel les crayons sont parallèles entre eux et disposés, dans les sections transversales de l'assemblage, suivant un réseau régulier déterminé par les entretoises. Certaines positions du réseau sont occupées par des tubes-guides qui sont généralement reliés de manière rigide aux entretoises.

Les tubes-guides ont une longueur supérieure à la longueur des crayons combustibles et sont placés dans le faisceau, de manière à comporter une partie saillante par rapport au faisceau de crayons combustibles à chacune de leurs extrémités. Les embouts sont fixés sur ces parties saillantes des tubes-guides de manière à assurer la fermeture de l'assemblage à chacune de ses extrémités.

Les crayons combustibles sont constitués par des pastilles frittées en matériau combustible nucléaire empilées à l'intérieur d'une gaine métallique isolant les pastilles du fluide entourant l'assemblage combustible. Dans le cas d'une rupture de gaine d'un crayon d'un assemblage combustible, il est nécessaire de remplacer très rapidement ce crayon pour éviter les fuites de produit radio-actif dans le fluide de refroidissement du réacteur. Pour accèder aux crayons combustibles et effectuer leur remplacement, il est nécessaire de démonter l'un des embouts de l'assemblage, ce qui suppose de supprimer les liaisons entre les extrémités correspondantes des tubes-guides et l'embout.

Les embouts comportent des trous traversants reproduisant le réseau des tubes-guides dans chacun desquels est engagé et fixé un tube-guide.

De façon à pouvoir remplacer des crayons défectueux dans les assemblages combustibles, on a conçu et mis au point de nouveaux assemblages combustibles comportant des tubes-guides dont la liaison avec l'un au moins des embouts d'extrémité est démontable.

Pour effectuer le remplacement des crayons combustibles défectueux, l'assemblage est placé sous eau en position verticale, dans une piscine telle qu'une piscine de stockage ; l'assemblage repose sur le fond de la piscine par l'un de ses embouts ou embout inférieur. L'autre embout ou embout supérieur est accessible sous une certaine hauteur d'eau depuis le dessus de la piscine.

Dans un type d'assemblage combustible démontable connu, les parties des tubes-guides engagées dans l'embout supérieur de l'assemblage comportent une partie expansible radialement qui peut être, par exemple, rapportée à l'extrémité du tube-guide. Cette partie expansible peut être constituée par une douille fendue présentant une partie en saillie radiale vers l'extérieur qui est destinée à venir se loger dans une cavité de forme correspondante usinée à l'intérieur de l'embout, dans le trou de passage du tube-guide. Un manchon de blocage introduit à l'intérieur du tube-guide réalise l'expansion radiale de la douille fendue et l'accrochage du tube-guide dont la partie en saillie radiale vient se loger à l'intérieur de la cavité usinée dans l'embout.

Le tube-guide n'est engagé dans le trou traversant la plaque adaptatrice de l'embout que sur une certaine longueur, la partie restante du trou, au-dessus du tube-guide, débouchant sur la face supérieure de la plaque adaptatrice de l'embout.

On connaît, par exemple par le EP-A-0.140.588, une liaison démontable pour tube-guide d'assemblage combustible du type décrit ci-dessus comportant un manchon de blocage ayant une partie assurant l'expansion du tube-guide prolongée axialement par une virole de fixation qui vient se loger, lorsque le manchon de blocage est mis en place dans le tube-guide, dans la partie du trou située au-dessus du tube-guide et débouchant sur la face supérieure de la plaque adaptatrice. Des cavités radiales sont prévues dans cette partie du trou de la plaque adaptatrice et la virole de fixation est déformée, après mise en place du manchon de blocage dans le tube-guide, de façon que les parties déformées de cette virole de fixation viennent à l'intérieur des cavités pour réaliser le blocage axial et en rotation du manchon de blocage.

On obtient ainsi une fixation efficace du tube-guide par des opérations qui peuvent être effectuées sans difficulté, par le dessus de l'assemblage.

Cependant, le manchon du tube-guide nécessite qu'on effectue, dans un premier temps, l'extraction du manchon de blocage qui est maintenu dans l'embout par la virole de fixation. Cette opération peut être réalisée par un outil qui est introduit dans le manchon et qui comporte des parties mobiles dans des directions radiales venant se placer sous l'extrémité inférieure du manchon. Une traction est exercée sur l'outil pour permettre le déblocage de la virole de fixation et l'extraction du manchon du tube-guide.

Cette opération d'extraction des manchons de blocage avant le démontage de l'embout supérieur de l'assemblage nécessite l'utilisation d'un outillage complexe et l'intervention de forces de traction d'autant plus importantes que la fixation du manchon par l'intermédiaire de la virole est assurée de manière plus efficace.

De manière générale, les procédés d'extraction de manchons de blocage connus de la technique antérieure mettent en oeuvre des forces de traction élevées et/ou réalisent l'extraction par choc sur un outil mis en appui sur la partie inférieure du manchon de blocage, ce qui peut entraîner des détériorations de l'assemblage pendant le démontage de son embout supérieur.

Le but de l'invention est donc de proposer un procédé d'extraction d'au moins un manchon de blocage d'un tube-guide dans un embout démontable d'un assemblage combustible d'un réacteur nucléaire refroidi par de l'eau légère comportant un faisceau de crayons combustibles parallèles maintenu dans une ossature formée par des tubes-guides, des entretoises et des embouts d'extrémité fixés sur les extrémités des tubes-guides, l'un au moins des embouts étant fixé sur l'une des extrémités de chacun des tubes-guides de manière démontable, par l'intermédiaire d'une partie d'extrémité du tube-guide déformable radialement et présentant une partie d'accrochage en saillie radiale vers l'extérieur, engagée à l'intérieur et sur une partie de la longueur d'une ouverture traversant l'embout et comportant, dans sa partie recevant le tube-guide, un élargissement annulaire destiné à recevoir la partie d'accrochage du tube-guide, l'expansion radiale de l'extrémité du tube-guide et le maintien de sa partie d'accrochage dans l'élargissement annulaire de l'ouverture de l'embout étant assurés par un manchon de blocage comportant une douille d'expansion du tube-guide et une virole de fixation dans l'embout restant saillante à l'extrémité du tube-guide, dans la position de blocage du manchon, à l'intérieur d'une partie de l'ouverture de l'embout ne recevant pas le tube-guide, cette partie de l'ouverture de l'embout comportant au moins une cavité radiale à l'intérieur de laquelle on introduit par déformation radiale d'au moins une zone de la virole placée en coïncidence avec la cavité, au moins une partie déformée de la virole de fixation, pour assurer la fixation du manchon de blocage dans l'embout, ce procédé d'extraction pouvant être mis en oeuvre sans soumettre l'assemblage à des chocs répétés et sans exercer une force de traction importante sur le manchon.

Dans ce but :
- on descend un outil situé à l'extrémité d'une perche dans la piscine, de manière à engager une partie d'extrémité de l'outil dans le manchon et à placer un mandrin de serrage de l'outil autour de la virole de fixation du manchon,
- on provoque le serrage de secteurs du mandrin de serrage de l'outil par déplacement d'une chemise coulissante dans la direction axiale de la perche de manière à déformer par pliage vers l'intérieur la ou les zones de la virole de fixation comportant une partie déformée en saillie radiale, pour extraire la partie déformée de la cavité correspondante et de manière à serrer la virole de fixation entre les secteurs et la partie d'extrémité de l'outil,
- puis on extrait le manchon de blocage par traction sur la perche dans la direction axiale du tube-guide.

L'invention est également relative à un dispositif permettant d'effectuer l'extraction et éventuellement la pose d'un manchon de blocage d'un tube-guide dans un embout démontable d'un assemblage combustible pour un réacteur nucléaire.

Afin de bien faire comprendre l'invention, on va maintenant décrire, en se référant aux figures jointes en annexe, un exemple de mise en oeuvre du procédé suivant l'invention et un outil d'extraction de manchons de blocage permettant de mettre en oeuvre ce procédé.

La figure 1 est une vue en élévation d'un assemblage combustible d'un réacteur nucléaire à eau sous pression.

La figure 2 est une vue en élévation de l'ossature de l'assemblage représenté sur la figure 1.

La figure 3 est une vue en élévation avec coupe partielle de l'embout supérieur de l'assemblage combustible.

La figure 4 est une vue de dessus suivant 4 de l'embout supérieur représenté sur la figure 3.

La figure 5 est une vue en perspective avec arrachement d'un manchon de blocage permettant une mise en oeuvre facilitée du procédé suivant l'invention.

La figure 6 est une vue en coupe axiale de la partie inférieure d'un outil d'extraction d'un manchon de blocage, en position dans le manchon, avant le début de la première phase de l'extraction.

La figure 7 est une vue en coupe axiale analogue à la vue de la figure 6, de l'outil, à l'issue de la première phase de l'extraction.

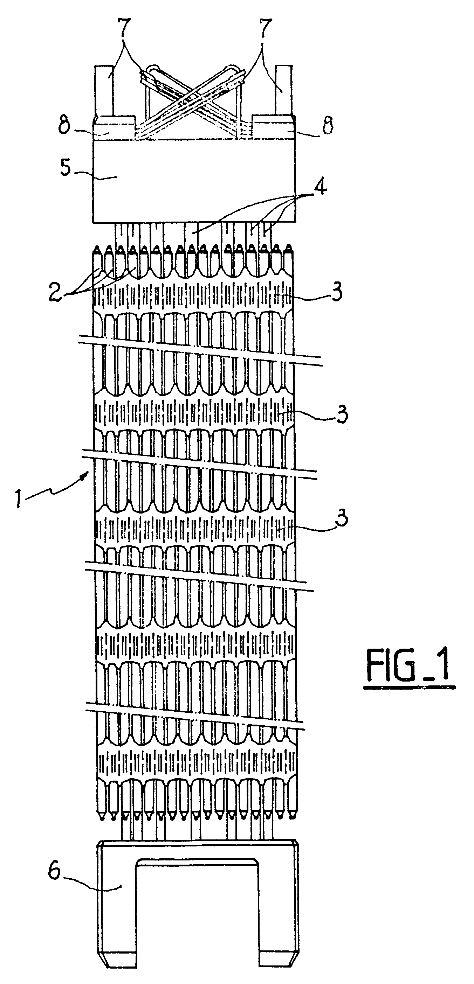

Sur la figure 1 on voit un assemblage combustible désigné de manière générale par le repère 1 et constitué par un faisceau de crayons combustibles parallèles 2 maintenus par des entretoises 3 disposées avec un certain espacement suivant la longueur des crayons 2. Les entretoises 3 sont constituées par des grilles dont les cellules reçoivent chacune un crayon combustible. Certaines positions dans le réseau des grilles sont occupées par des tubes-guides 4 dont la longueur est supérieure à la longueur des crayons combustibles 2.

Les tubes-guides 4 sont reliés à l'une de leurs extrémités à un embout 5 constituant l'embout supérieur de l'assemblage combustible et à leur autre extrémité à un second embout 6 constituant l'embout inférieur.

Lorsque l'assemblage est en position de stockage sous eau dans une piscine, l'embout supérieur 5 est accessible depuis le dessus de la piscine. Cet embout supérieur 5 porte des ressorts à lame 7 assurant le maintien de l'assemblage dans le coeur du réacteur, dont la plaque supérieure de coeur vient reposer sur les ressorts 7. L'embout comporte également des plots 8 saillants par rapport à sa face supérieure.

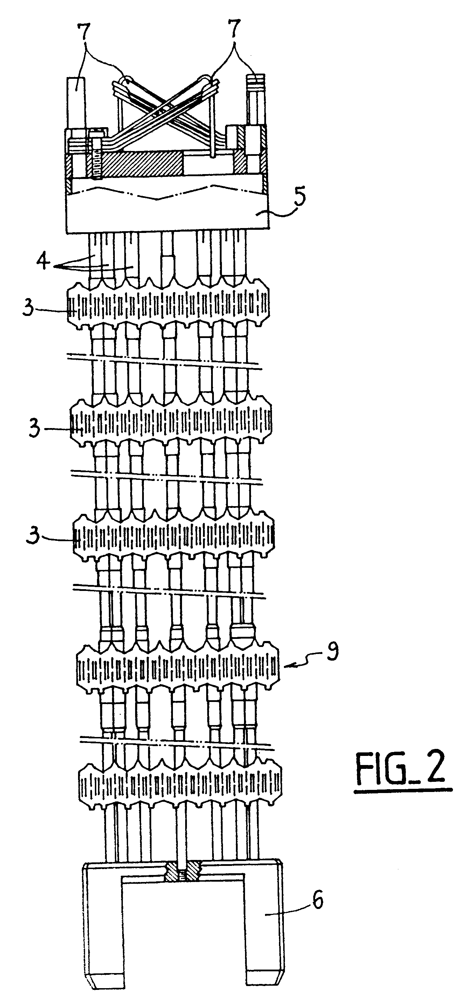

Sur la figure 2, on a représenté l'ossature 9 de l'assemblage combustible comportant les tubes-guides 4, des entretoises 3 et les embouts d'extrémité 5 et 6. Cette ossature 9 sert de logement aux crayons combustibles 2 du faisceau qui peuvent être introduits ou extraits de l'ossature, lorsque l'embout supérieur 5 est enlevé. Pour effectuer le remplacement ou le prélèvement de crayons, on prévoit des liaisons démontables entre l'extrémité des tubes-guides 4 et l'embout supérieur 5.

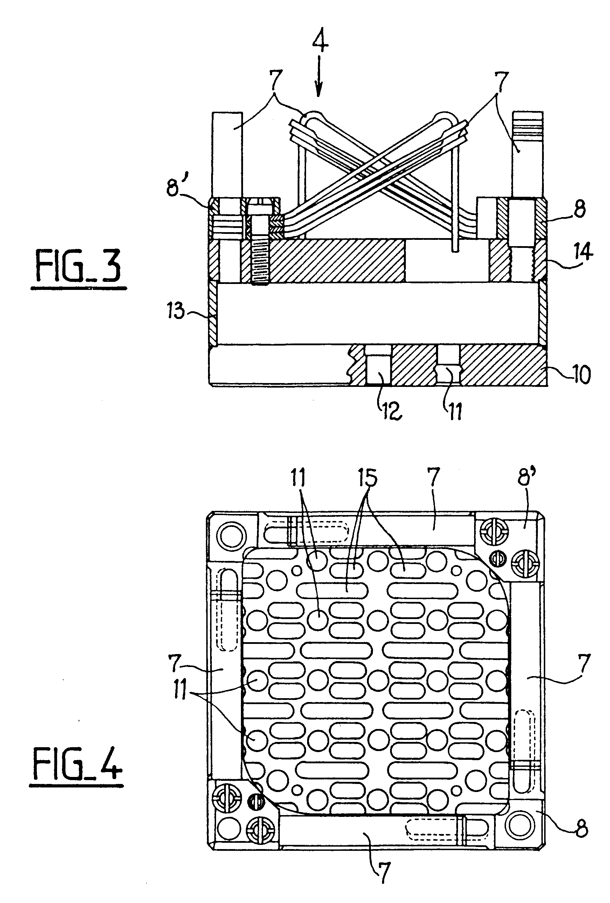

Sur les figures 3 et 4, on voit un embout supérieur d'un assemblage combustible comportant une plaque adaptatrice 10 dans laquelle viennent s'engager les tubes-guides, à l'intérieur d'ouvertures 11 traversant cette plaque adaptatrice et accessibles depuis la partie supérieure de l'assemblage combustible. Le tube-guide d'instrumentation de l'assemblage combustible situé en partie centrale est reçu dans une ouverture 12 de forme particulière. L'embout supérieur de l'assemblage est constitué par la plaque adaptatrice 10 et par un cadre 14 reliés entre eux par l'intermédiaire d'une jupe 13 soudée sur la plaque 10 et sur le cadre 14. Le cadre 14 porte les bossages 8 comportant les ouvertures de centrage et des brides 8' de maintien des ressorts 7.

Comme il est visible sur la figure 4, les trous de passage 11 permettant la fixation des tubes-guides 4 sont disposés dans des positions définies correspondant aux positions des vingt-quatre tubes-guides de l'assemblage. Des trous de passage d'eau 15 traversent la plaque adaptatrice 10 de l'embout entre les ouvertures traversantes 11 des tubes-guides.

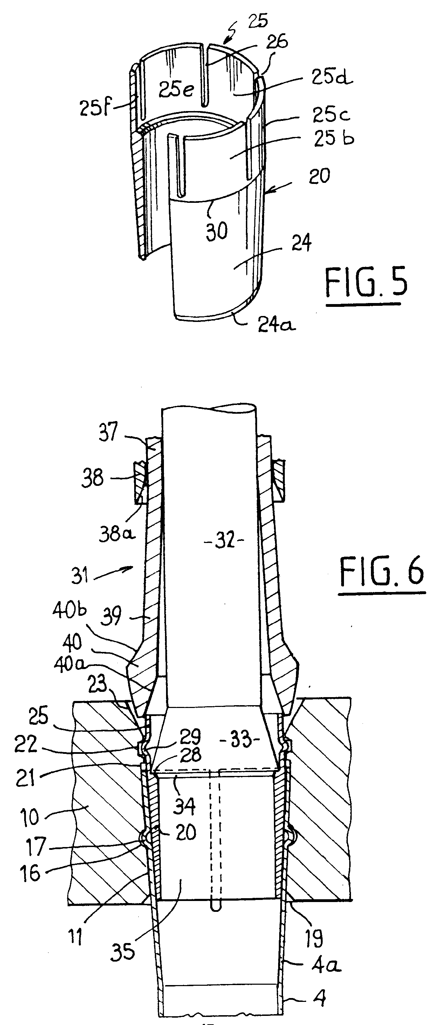

Sur la figure 5, on voit un manchon de blocage désigné de manière générale par le repère 20, permettant une mise en oeuvre facilitée du procédé suivant l'invention.

Ce manchon de blocage comporte une partie inférieure 24 ayant une surface externe de forme tronconique qui constitue la partie du manchon de blocage assurant l'expansion du tube-guide et une partie supérieure constituée par une virole cylindrique 25 constituant la virole de fixation du manchon de blocage dans l'embout de l'assemblage combustible.

La virole 25 est constituée par six secteurs cylindriques 25a, 25b, 25c, 25d, 25e et 25f séparés les uns des autres par des fentes 26 disposées suivant la direction des génératrices de la virole 25.

Les secteurs cylindriques 25a à 25f sont identiques, les fentes 26 étant disposées à 60° les unes des autres autour de l'axe du manchon de blocage 20.

La douille d'expansion 24 du manchon de blocage de forme tronconique comporte un alésage intérieur de forme sensiblement cylindrique, si bien que l'épaisseur de la paroi de cette douille 24 est décroissante depuis sa grande base au niveau de laquelle se raccorde la virole 25, suivant la ligne 30, jusqu'à sa petite base, au niveau de laquelle est prévue une surface inclinée 24a tronconique facilitant l'engagement du manchon de blocage dans le tube-guide.

La douille d'expansion 24 du manchon de blocage dont l'épaisseur est relativement forte présente une bonne rigidité assurant un maintien efficace du tube-guide, comme il sera expliqué plus loin.

La virole 25 présente une épaisseur sensiblement plus faible que l'épaisseur de la douille d'expansion 24, en particulier au voisinage de la ligne de jonction 30, c'est-à-dire de la grande base de la partie 24. Le manchon de blocage 20 présente un rebord intérieur 28 en saillie radiale terminée par une surface inclinée 28a tronconique dirigée vers l'intérieur du manchon.

Le manchon 20 peut être réalisé en une seule pièce usinée ou, alternativement, la virole 25 peut être rapportée à la partie supérieure de la partie de maintien tronconique 24. Les fentes 26 peuvent être réalisées par découpage de la virole 25, après usinage ou assemblage du manchon.

Dans tous les cas, les secteurs cylindriques 25a à 25f constituant la virole 25 peuvent être déformés par repoussage à l'intérieur de cavités de blocage dans l'embout de l'assemblage combustible, et par pliage autour d'une ligne située au voisinage de la ligne 30.

Sur la figure 6, on voit la plaque adaptatrice 10 d'un embout supérieur d'un assemblage combustible, au voisinage d'une ouverture traversante 11 dans laquelle est engagée l'extrémité 4a d'un tube-guide 4.

L'extrémité supérieure 4a du tube-guide 4 a été mise en forme préalablement à son introduction dans l'ouverture 11, pour venir se loger parfaitement dans la partie d'entrée de cette ouverture qui présente une forme légèrement tronconique et qui comporte un élargissement annulaire 16.

La partie supérieure 4a du tube 4 présente une forme tronconique correspondant à la forme de la partie d'entrée de l'ouverture 11 et une partie d'accrochage annulaire 17 en saillie radiale vers l'extérieur destinée à venir se loger dans l'élargissement annulaire 16 de la plaque 10, lors de la mise en place du tube 4 dans l'ouverture 11.

La partie d'entrée tronconique de l'ouverture 11 se termine par un épaulement 21 en saillie radiale vers l'intérieur de l'ouverture 11. Il est à remarquer que l'extrémité du tube 4, lorsque celui-ci est complètement engagé dans l'ouverture 11, n'est pas en appui sur l'épaulement 21. Le préformage du tube permet de le mettre en place sans difficulté et de manière très précise à l'intérieur de l'embout sans réaliser d'appui de butée.

L'ouverture 11 comporte à son extrémité d'entrée sur la face inférieure de la plaque adaptatrice 10 un élargissement tronconique 19 permettant de faciliter l'introduction du tube 4.

La partie supérieure ou partie de sortie de l'ouverture 11, située au-dessus de l'épaulement 21, comporte une cavité radiale 22 en forme d'anneau.

Au-dessus de la cavité 22, l'ouverture 11 constitue une partie de sortie évasée 23 débouchant sur la face supérieure de la plaque adaptatrice 10.

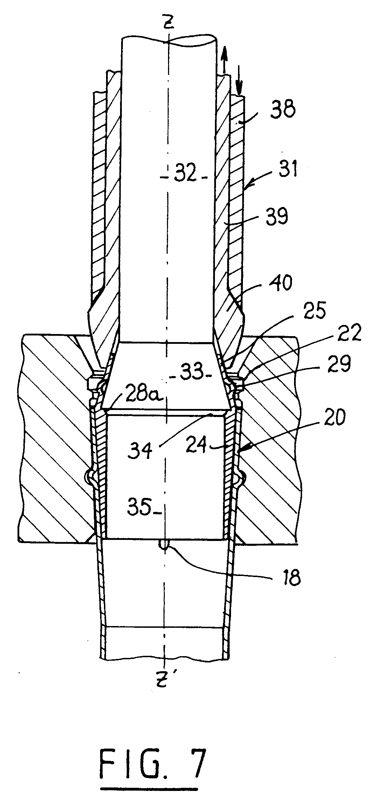

Le remontage d'un assemblage combustible comportant des tubes-guides et des moyens de liaison tels que représentés sur les figures 6 et 7 peut être effectué sous eau dans la piscine de stockage des assemblages combustibles du réacteur nucléaire de la manière suivante.

L'assemblage combustible repose par son embout inférieur sur le fond de la piscine, les tubes-guides de l'assemblage étant en position verticale. La partie supérieure de ces tubes-guides sur laquelle on engage la plaque adaptatrice 10 de l'embout 5 se trouve sous une hauteur d'eau suffisante pour protéger les opérateurs effectuant le remontage. L'engagement de la plaque adaptatrice sur les extrémités 4a des tubes-guides ne présente pas de difficulté, les tubes-guides étant maintenus dans une disposition transversale précise par les entretoises de l'assemblage. En outre, les extrémités préformées des tubes-guides permettent d'assurer un engagement et une mise en place précis des tubes-guides dans les ouvertures traversantes de la plaque adaptatrice.

La partie supérieure 4a de chacun des tubes-guides est réalisée de manière à être déformable radialement pour permettre son engagement dans l'ouverture 11, puis son expansion pour réaliser l'accrochage des parties en saillie 17 dans les élargissements annulaire 16. Pour cela, au moins deux fentes telles que 18 disposées à 180° l'une par rapport à l'autre séparent la partie supérieure 4a du tube-guide en au moins deux secteurs tronconiques déformables dans la direction radiale.

Après mise en place de l'embout supérieur sur l'extrémité des tubes-guides, on réalise la fixation de ces tubes-guides à l'aide de manchons de blocage 20 tels que représentés sur la figure 5 et en utilisant un outillage tel que représenté sur les figures 6 et 7 et désigné de manière générale par le repère 31.

L'outillage 31 est constitué par une perche de grande longueur dont la partie inférieure 32 est visible sur les figures 6 et 7. La perche de l'outillage 31 est fixée par sa partie supérieure à un moyen de manutention et de levage tel qu'un pont roulant desservant la piscine du combustible et peut être déplacée à l'intérieur de la piscine, avec son axe ZZ' en position verticale.

La partie inférieure 32 de la perche comporte successivement de haut en bas, une partie cylindrique, une partie tronconique d'appui 33 évasée vers l'extérieur, une surface de poussée tronconique 34 dirigée vers l'intérieur et une partie terminale 35 cylindrique.

La partie terminale 35 de la partie inférieure 32 de la perche comporte des moyens de retenue d'un manchon de blocage non représentés. Ces moyens de retenue peuvent être constitués par exemple par des ressorts à lame courbes dont la convexité est dirigée vers l'extérieur et qui sont fixés dans la direction axiale, sur la surface extérieure de la partie terminale 35.

De tels dispositifs de retenue sont décrits dans la demande de brevet EP-A-0.360.665 déposée par la Société FRAMATOME.

L'outillage 31 comporte deux éléments de forme tubulaire 37 et 38 dont le premier 37 est monté coulissant sur la partie cylindrique de la perche située au-dessus de la surface tronconique 33 et dont le second 38 est monté coulissant autour du premier.

Le premier élément coulissant 37 comporte des fentes dans sa partie inférieure délimitant des secteurs 39 déformables radialement dont la partie inférieure 40 constitue un bec de pince.

L'élément 37 sur lequel l'élément 38 est monté coulissant constitue un mandrin de serrage dont les parties inférieures 39 peuvent se déplacer radialement entre une première position représentée sur la figure 6 et une seconde position représentée sur la figure 7.

La chemise coulissante 38 est reliée, à sa partie supérieure non représentée, à un dispositif de déplacement axial permettant de la déplacer entre ses positions représentées sur les figures 6 et 7 respectivement.

Chacun des becs de pince 40 de l'élément 37 comporte une surface intérieure d'appui tronconique 40a et une surface extérieure tronconique d'appui 40b.

La chemise coulissante 38 comporte une surface d'appui tronconique 38a à sa partie inférieure.

Pour effectuer le remontage de l'embout d'un assemblage combustible, on utilise un dispositif d'approvisionnement en manchons disposé dans la piscine, à proximité de l'embout à remonter. Un tel dispositif d'approvisionnement a été décrit dans la demande de brevet EP-A-0.360.665 déposée par la Société FRAMATOME.

L'outil 31 est placé de manière à introduire la partie terminale 35 de la perche dans l'alésage intérieur cylindrique de la douille de maintien 24 d'un manchon placé dans le dispositif d'approvisionnement. La partie terminale 35 engagée dans le manchon permet, grâce à ses dispositifs de retenue, de prélever le manchon et de l'introduire par l'extrémité évasée 23, dans une ouverture 11 de la plaque adaptatrice 10 dans laquelle est engagé un tube-guide 4. On exerce une poussée sur la perche de l'outillage 31 dont la partie inférieure 32 est en contact avec le rebord 28 et la surface 28a du manchon 20, par l'intermédiaire d'un épaulement et de la surface d'appui tronconique 34 respectivement. La poussée transmise au manchon 20 permet son introduction dans le tube 4 en position de blocage, comme représenté sur la figure 6. Une cale de réglage permet de déterminer de manière précise la position de la perche de l'outillage 31 en fin d'introduction du manchon 20.

On effectue ensuite le levage de la perche de l'outillage 31 de manière à dégager sa partie terminale 35, du manchon 20 qui reste en place dans le tube-guide dont il assure la fixation.

On réalise ensuite, grâce à un outillage de type connu, le repoussage d'une partie de chacun des secteurs cylindriques 25a à 25f, dans la cavité 22 de la partie supérieure de l'ouverture 11 de la plaque 10 de l'embout.

Les parties déformées 29 ainsi obtenues engagées dans la cavité 22 permettent le blocage axial du manchon 20 par rapport à l'embout.

Le tube-guide 4 est ainsi parfaitement fixé dans l'embout démontable.

Pour effectuer le démontage de l'embout, il est nécessaire de réaliser l'extraction des manchons de blocage 20 engagés dans les tubes-guides et fixés dans la plaque adaptatrice de l'embout.

Pour celà, on utilise l'outillage 31 qui, dans un premier temps, est amené au-dessus de l'assemblage placé sous eau dans la piscine et engagé dans le manchon 20 comme représenté sur la figure 6. La perche de l'outillage 31 vient en butée sur le rebord 28 et la portée d'appui 28a par l'intermédiaire de l'épaulement de la partie 33 et de la surface d'appui 34. Les becs de pince 40 de l'élément de mandrin 37 sont alors engagés dans l'ouverture tronconique 23, autour de l'extrémité supérieure de la virole 25.

On provoque la descente de la chemise d'actionnement 38 qui assure le rabattement radial des secteurs 39 de l'élément 37 vers l'intérieur.

Sur la figure 7, on a représenté la position finale des secteurs 39, à la fin du mouvement de descente de la chemise 38. Au cours de leur pivotement vers l'intérieur, les secteurs 39 viennent en contact avec la partie supérieure des secteurs cylindriques 25a à 25f de la virole 25 dont ils réalisent le pliage vers l'intérieur, jusqu'au moment où les secteurs viennent en contact avec la surface tronconique 33.

Vers la fin de son mouvement de descente, la chemise d'actionnement 38 vient en contact pas sa surface 38a avec la surface d'appui 40b de l'élément 37 qui présente une certaine latitude de glissement autour de l'extrémité 32 de la perche. Le glissement vers le bas de l'élément 37 permet de faciliter le pliage des secteurs de la virole 25 et de réaliser une prise efficace de la virole 25 par les becs de pince 40, comme représenté sur la figure 7.

Le pliage des secteurs de la virole 25 a permis de dégager les parties déformées 29 de ces secteurs de la cavité 22.

Le manchon de blocage 20 n'est donc plus maintenu dans l'ouverture de la plaque adaptatrice par la virole de fixation.

L'extraction du manchon 20 peut être effectuée facilement en relevant la perche de l'outillage 31 grâce au moyen de levage fixé à sa partie supérieure. Il suffit en effet de vaincre les forces de serrage de la douille de maintien tronconique 24 à l'intérieur du tube 4, ces forces étant très inférieures à celles nécessaires au dégagement de parties déformées telles que 29 de la cavité radiale 22. D'autre part, la virole 25 est fermement maintenue par pincement entre les surfaces d'appui 40a des becs de pince 40 et la surface tronconique 33.

L'extraction des manchons de blocage est donc obtenue sans difficulté grâce au procédé de l'invention.

L'invention ne se limite pas au mode de réalisation qui a été décrit.

C'est ainsi qu'on peut utiliser le procédé suivant l'invention pour réaliser l'extraction de manchons de blocage d'un type différent de celui qui a été décrit dans lequel la virole de fixation est constituée par des secteurs cylindriques successifs séparés par des fentes.

On peut envisager d'utiliser le procédé suivant l'invention dans le cas de manchons comportant des languettes déformables découpées dans la virole de fixation qui peuvent être repoussées vers l'extérieur dans des cavités de l'embout au moment de la fixation du manchon de blocage et repliées vers l'intérieur pour réaliser leur dégagement des cavités, au moment de l'extraction du manchon.

On peut également imaginer l'utilisation d'une virole de fixation présentant des lignes de pliage permettant le rabattement des parties de la virole entre deux lignes de pliage et le dégagement de parties déformées des cavités correspondantes.

Dans le cas où la virole de fixation est constituée par des secteurs cylindriques séparés par des fentes, le nombre de secteurs peut être quelconque et une partie seulement de ces secteurs peut comporter des parties déformées à l'intérieur de cavités prévues dans l'embout.

L'outillage pour réaliser l'extraction des manchons de blocage peut être différent de celui qui a été décrit. Cet outillage peut être prévu pour effectuer seulement l'extraction du manchon ou au contraire à la fois la pose et l'extraction.

L'outillage peut être également constitué par une plaque portant un ensemble de broches d'extraction disposées suivant un réseau reproduisant la disposition des tubes-guides d'un ou plusieurs assemblages combustibles et constituées chacune de la même façon que l'outil d'extraction décrit plus haut. La plaque est associée à un moyen de déplacement dans la direction verticale et comporte des moyens de commande simultanée des éléments de pliage et de pincement de l'ensemble des broches. L'outillage est mis en place sur l'embout supérieur d'au moins un assemblage combustible de manière que les broches soient engagées chacune sur un manchon de blocage d'un tube-guide de l'assemblage.

Le dégagement et l'extraction des manchons de blocage des tubes-guides d'un ou plusieurs assemblages combustibles peuvent alors être effectués simultanément, ce qui assure un gain de temps important.

Enfin, le procédé suivant l'invention s'applique à tout assemblage combustible démontable pour un réacteur nucléaire à eau légère, dans lequel les tubes-guides sont fixés à l'intérieur d'un embout par l'intermédiaire de manchons de blocage comportant une virole de fixation du manchon à l'intérieur de l'embout.

## Revendications

1. Procédé d'extraction d'au moins un manchon de blocage (20) d'un tube-guide (4) dans un embout démontable (5) d'un assemblage combustible d'un réacteur nucléaire refroidi par de l'eau légère comportant un faisceau de crayons combustibles parallèles maintenus dans une ossature (9) formée par des tubes-guides (4), des entretoises (3) et des embouts d'extrémité (5, 6) fixés sur les extrémités des tubes-guides (4) de manière démontable, par l'intermédiaire d'une partie d'extrémité (4a) du tube-guide déformable radialement et présentant une partie d'accrochage (17) en saillie radiale vers l'extérieur, engagée à l'intérieur et sur une partie de la longueur d'une ouverture (11) traversant l'embout (5) et comportant, dans sa partie recevant le tube-guide (4), un élargissement annulaire (16) destiné à recevoir la partie d'accrochage (17) du tube-guide (4), l'expansion radiale de l'extrémité du tube-guide et le maintien de sa partie d'accrochage (17) dans l'élargissement annulaire (16) de l'ouverture (11) de l'embout étant assurés par un manchon de blocage (20) comportant une partie d'expansion (24) du tube-guide (4) et une virole de fixation (25) dans l'embout restant saillante à l'extrémité du tube-guide, dans la position de blocage du manchon, à l'intérieur d'une partie de l'ouverture (11) de l'embout ne recevant pas le tube-guide, cette partie de l'ouverture (11) de l'embout comportant au moins une cavité radiale (22) à l'intérieur de laquelle on introduit, par déformation radiale d'au moins une zone de la virole (25) en coïncidence avec la cavité (22), au moins une partie déformée (29) de la virole de fixation (25), pour assurer la fixation du manchon de blocage (20) dans l'embout (5), caractérisé par le fait que, l'assemblage étant placé sous eau dans une piscine,
- on descend un outil (31) situé à l'extrémité d'une perche (32) dans la piscine, de manière à engager une partie d'extrémité de l'outil dans le manchon (20) et à placer un mandrin de serrage (39) de l'outil autour de la virole de fixation (25) du manchon,
- on provoque le serrage de secteurs (39) du mandrin de serrage de l'outil, par déplacement d'une chemise coulissante (38) dans la direction axiale de la perche (32) de manière à déformer par pliage vers l'intérieur la ou les zones (25a, ... 25f) de la virole de fixation comportant une partie déformée (29) en saillie radiale, pour extraire la partie déformée (29) de la cavité (22) correspondante et de manière à serrer la virole de fixation (25) entre les secteurs (39) et la partie d'extrémité de l'outil,
- puis on extrait le manchon de blocage (20) par traction sur la perche (32) dans la direction axiale du tube-guide (4).

2. Procédé d'extraction suivant la revendication 1, caractérisé par le fait que les zones (25a à 25f) de la virole (25) comportant des parties déformées (29) sont constituées par des secteurs cylindriques séparés les uns des autres par des fentes (26) disposées suivant la direction des génératrices de la virole (25).

3. Procédé d'extraction suivant la revendication 2, caractérisé par le fait que le pliage vers l'intérieur des secteurs cylindriques (25a à 25f) constituant la virole de fixation (25) est effectué autour d'une ligne voisine de la ligne de jonction entre la virole (25) et la partie d'expansion (24) du manchon de blocage (20).

4. Dispositif d'extraction pour la mise en oeuvre d'un procédé selon l'une quelconque des revendications 1 à 3, caractérisé par le fait qu'il comporte :
- une perche de grande longueur disposée avec son axe vertical et suspendue à sa partie supérieure à un moyen de manutention et de levage disposé au-dessus d'une piscine dans laquelle l'assemblage est placé sous eau, la perche comportant une partie inférieure (32) dont la partie terminale (33, 34, 35) présente une forme et des dimensions lui permettant d'être introduite à l'intérieur du manchon de blocage (20),
- un élément (37) disposé à la périphérie de la partie inférieure (32) de la perche et comportant des organes (39) mobiles dans la direction radiale dont la partie d'extrémité (40) constituant un bec de pince est susceptible de se déplacer dans la direction radiale et vers l'intérieur entre une position desserrée et une position de serrage, pour réaliser le pliage des zones déformées de la virole (25) et le pincement de la virole (25) entre les becs (40) et une partie (33) de l'extrémité inférieure (32) de la perche,
- et une chemise (38) de déplacement des organes (39) entre leur position desserrée et leur position de serrage montée coulissante dans la direction axiale sur l'élément (37) et commandée depuis la partie supérieure de la perche, au niveau supérieur de la piscine.

5. Dispositif d'extraction suivant la revendication 4, caractérisé par le fait que l'élément (37) est constitué sous la forme d'un mandrin cylindrique, les organes (39) étant constitués par des secteurs séparés par des fentes et le moyen de manoeuvre (38) par une chemise montée coulissante sur la surface extérieure de l'élément (37).

6. Dispositif d'extraction suivant la revendication 5, caractérisé par le fait que l'élément (37) est monté coulissant sur une distance limitée sur la partie inférieure (32) de la perche, la chemise (38) comportant une partie d'appui (38a) à son extrémité susceptible de venir en appui sur une surface (40b) des becs de pince (40), pour déplacer vers le bas par coulissement l'élément (37) pour faciliter le pliage et le pincement de la virole (25).

7. Dispositif d'extraction suivant la revendication 4, caractérisé par le fait que les becs de pince (40) comportent une partie d'extrémité effilée susceptible de se placer, lorsque l'extrémité inférieure de la perche est engagée dans le manchon (20), autour de l'extrémité supérieure de la virole (25), à l'intérieur d'une ouverture évasée (23) prévue à l'extrémité de l'ouverture (11) traversant l'embout (5, 10) opposée à l'extrémité d'introduction du tube-guide (4).

8. Dispositif d'extraction suivant l'une quelconque des revendications 6 et 7, caractérisé par le fait que la partie d'extrémité de la perche pouvant être introduite dans le manchon de blocage (20) comporte de haut en bas, une partie tronconique (33) et une partie cylindrique terminale (35).

9. Dispositif d'extraction suivant la revendication 8, caractérisé par le fait que la partie d'extrémité inférieure de la perche comporte, entre la partie tronconique (33) et la partie terminale (35), un épaulement radial et une surface d'appui tronconique (34) susceptibles de venir en appui sur un rebord correspondant (28, 28a) à l'intérieur du manchon (20), lorsque la partie d'extrémité inférieure de la perche est introduite dans le manchon (20).

10. Dispositif d'extraction suivant la revendication 4, caractérisé par le fait que la partie inférieure (32) de la perche comporte des moyens de retenue du manchon (20) et des moyens d'appui sur une partie (28, 28a) en saillie à l'intérieur du manchon (20), le dispositif d'extraction étant susceptible de réaliser la pose de manchons de blocage (20) dans des tubes-guides (4), sous eau, dans une piscine.

11. Procédé d'extraction selon l'une quelconque des revendications 1 à 3 pour réaliser l'extraction simultanée des manchons de blocage (20) de l'ensemble des tubes-guides (4) d'un embout démontable (5) d'au moins un assemblage combustible d'un réacteur nucléaire disposé sous eau dans une piscine, caractérisé par le fait :
- qu'on descend un outil situé à l'extrémité de la perche (32) et comportant une pluralité de broches et une pluralité de mandrins ayant une disposition correspondant à la disposition des tubes-guides de l'assemblage, dans la piscine, de manière à engager chacune des broches dans un manchon de blocage d'un tube-guide et à placer chacun des mandrins de serrage autour de la virole de fixation d'un manchon,
- et qu'on provoque simultanément le serrage des mandrins de l'outil de manière à déformer par pliage vers l'intérieur la ou les zones (25a, ... 25f) des viroles de fixation (25) comportant une partie déformée (29) en saillie radiale, pour extraire les parties déformées (29) des cavités (22) correspondantes et à serrer les viroles de fixation entre les mandrins et les broches,
- enfin qu'on extrait les manchons de blocage (20) par traction sur la perche (32) dans la direction axiale des tubes-guides (4).

12. Dispositif d'extraction pour la mise en oeuvre du procédé selon la revendication 11, caractérisé par le fait qu'il comporte :
- une plaque reliée à une perche de levage mobile dans la direction verticale,
- un ensemble de broches fixées sur la plaque suivant un réseau reproduisant la disposition transversale des tubes-guides d'au moins un assemblage combustible, chacune des broches comportant une partie terminale présentant une forme et des dimensions lui permettant d'être introduite à l'intérieur d'un manchon de blocage (20), et un élément (37) disposé à la périphérie de la broche comportant des organes (39) mobiles dans la direction radiale dont la partie d'extrémité (40) constituant un bec de pince est susceptible de se déplacer dans la direction radiale et vers l'intérieur entre une position desserrée et une position de serrage, pour réaliser le pliage des zones déformées de la virole (25) d'un manchon de blocage et le pincement de la virole (25) entre les becs (40) et une partie (33) de l'extrémité inférieure de la broche,
- et un moyen de commande de l'ensemble des organes (39) des broches portées par la plaque pour les déplacer entre leur position desserrée et leur position de serrage.

## Patentansprüche

1. Verfahren zum Herausziehen wenigstens einer Blockierhülse (20) eines Führungsrohres (4) in einem entfernbaren Endstück (5) einer Kernreaktor-Brennstabanordnung, die durch Leichtwasser gekühlt wird, mit einem Bündel aus Brennstäben, die parallel in einer Tragkonstruktion (9) gehalten werden, die durch Führungsrohre (4) gebildet werden, Abstandshülsen (3) und Endstücken (5, 6), die an den Enden der Führungsrohre (4) auf entfernbare Weise befestigt sind, mittels eines Endabschnitts (4a) des Führungsrohres, der radial verformbar ist, und einen Anhängbereich (17) aufweist, der radial nach außen vorspringt, in Eingriff im Inneren und über einen Bereich der Länge einer Öffnung (11), die das Endstück (5) durchsetzt, und in ihrem oberen Bereich, der das Führungsrohr (4) aufnimmt, eine ringförmige Ausweitung (16) aufweist, die dazu dient, den Anhängbereich (17) des Führungsrohres (4) aufzunehmen, wobei die radiale Ausdehnung des Endes des Führungsrohres und das Halten seines Anhängbereichs (17) in der ringförmïgen Ausweitung (16) der Öffnung (11) des Endstücks durch eine Blockierhülse oder -manschette (20) sichergestellt werden, die einen Ausdehnungsbereich (24) des Führungsrohres (4) und einen Befestigungsmantel (25) im Endstück aufweist, das vorspringend am Ende des Führungsrohres verbleibt, in der Verriegelungs- oder Blockierungsstellung der Manschette, im Inneren eines Bereichs der Öffnung (11) des Endstücks, der nicht das Führungsrohr aufnimmt, wobei dieser Bereich der Öffnung (11) des Endstücks wenigstens eine radiale Vertiefung (22) aufweist, in deren Inneres durch radiale Verformung wenigstens einer Zone des Mantels (25) in Übereinstimmung mit der Vertiefung (22), wenigstens ein verformter Bereich (29) des Befestigungsmantels (25) eingeführt wird, um die Festlegung der Blockiermanschette (20) in dem Endstück (5) sicherzustellen, **dadurch gekennzeichnet,** daß wenn die Anordnung in einem Becken unter Wasser gesetzt ist,
- ein Werkzeug (31), das sich am Ende einer Stange (32) befindet, in das Becken abgesenkt wird, derart, daß sie mit einem Endbereich des Werkzeugs in der Manschette (20) in Eingriff kommt, und daß eine Klemmhülse oder ein Klemmfutter (39) des Werkzeugs um den Befestigungsmantel (25) der Manschette eingesetzt wird,
- daß das Klemmen von Sektoren (39) der Klemmhülse des Werkzeugs durch Bewegen einer Gleitschürze (38) in die axiale Richtung der Stange (32) durch Verformen mittels Umfalten nach innen der einen oder der mehreren Zonen (25a, ... 25f) des Befestigungsmantels hervorgerufen wird, der einen verformten Bereich (29) radial vorspringend aufweist, um den verformten Bereich (29) aus der entsprechenden Vertiefung (22) herauszuziehen und dadurch, daß der Befestigungsmantel (25) zwischen den Sektoren (39) und dem Endbereich des Werkzeugs eingeklemmt wird,
- daß sodann die Blockierungsmanschette (20) durch Ziehen an der Stange (32) in die axiale Richtung des Führungsrohres (4) herausgezogen wird.

2. Verfahren zum Herausziehen nach Anspruch 1, dadurch gekennzeichnet, daß die Zonen (25a bis 25f) des Mantels (25), der verformte Bereiche (29) aufweist, durch zylindrische Sektoren gebildet werden, die voneinander durch Spalten oder Schlitze (26) getrennt sind, die gemäß der Richtung der Mantellinien des Mantels (25) angeordnet sind.

3. Verfahren zum Herausziehen nach Anspruch 2, dadurch gekennzeichnet, daß das Umbiegen bzw. Umfalten nach innen der zylindrischen Sektoren (25a bis 25f), die den Befestigungsmantel (25) bilden, um eine Linie ausgeführt wird, die in der Nähe der Verbindungslinie zwischen dem Mantel (25) und dem Ausdehnungsbereich (24) der Blockierungsmanschette (20) liegt.

4. Vorrichtung zum Herausziehen für die Durchführung eines Verfahren, nach einem der Ansprüche 1 bis 3, dadurch gekennzeichnet, daß sie aufweist:
- eine Stange von großer Länge, die mit ihrer vertikalen Achse angeordnet und an ihrem oberen Bereich an einer Handhabungs- und Hebeeinrichtung, die oberhalb eines Beckens angeordnet ist, in das diese Anordnung unter Wasser gesetzt ist, wobei die Stange einen unteren Bereich (32) aufweist, dessen Endabschnitt (33, 34, 35) eine Form und Abmessungen aufweist, die ihm erlauben, in das Innere der Blockierungsmanschette (20) eingeführt zu werden,
- ein Element (37), das am Umfang des unteren Bereiches (32) der Stange angeordnet ist und in die radiale Richtung bewegliche Organe (39) aufweist, deren Endbereich (40), der einen Zangenbacken bildet, geeignet ist, sich in die radiale Richtung und nach innen zwischen einer entspannten Position und einer Klemmposition zu bewegen, um das Umbiegen oder Falten der verformten Zonen des Mantels (25) und das Klemmen des Mantels (25) zwischen den Backen (40) und einem Bereich (33) des unteren Endes (32) der Stange zu erzeugen,
- und eine Schürze (38) zum Bewegen der Organe (39) zwischen ihrer gelösten Position und ihrer Klemmposition, die gleitbeweglich in axialer Richtung auf dem Element (37) angeordnet ist, und von dem oberen Bereich der Stange auf einem Niveau oberhalb des Beckens gesteuert wird.

5. Herauszieh-Vorrichtung nach Anspruch 4, dadurch gekennzeichnet, daß das Element (37) gebildet wird in der Form einer zylindrischen Hülse, wobei die Organe (39) gebildet werden durch voneinander durch Spalten getrennte Sektoren, und die Handhabungseinrichtung (38) durch eine Schürze gebildet wird, die gleitbeweglich an der Außenoberfläche des Elements (37) angeordnet ist.

6. Herauszieh-Vorrichtung nach Anspruch 5, dadurch gekennzeichnet, daß das Element (37) gleitbeweglich über eine begrenzte Distanz an dem unteren Bereich (32) der Stange angebracht ist, wobei die Schürze (38) einen Anschlagbereich (38a) an ihrem ende aufweist, das in Anlage an eine Oberfläche (40b) der Backen der Zange (40) kommen kann, um durch Gleiten nach unten das Element (37) zu bewegen, um das Umbiegen bzw. Umfalten und das Einklemmen des Mantels (15) zu erleichtern.

7. Herauszieh-Vorrichtung nach Anspruch 4, dadurch gekennzeichnet, daß die Backen der Zange (40) einen konisch zulaufenden Endabschnitt aufweisen, der geeignet ist, sich, wenn das untere Ende der Stange in Eingriff mit der Manschette (20) ist, um das obere Ende des Mantels (25) zu setzen, im inneren einer aufgeweiteten Öffnung (23), die am Ende der Öffnung (11) vorgesehen ist, die das Endstück (5, 10) durchsetzt, gegenüber dem Einführende des Führungsrohres (4).

8. Herauszieh-Vorrichtung nach einem der Ansprüche 6 oder 7, dadurch gekennzeichnet, daß der Endbereich der Stange, der in die Blockierungsmanschette (20) eingeführt werden kann, von oben nach unten einen kegelstumpfförmigen Bereich (33) und einen zylindrischen Endbereich (35) aufweist.

9. Herauszieh-Vorrichtung nach Anspruch 8, dadurch gekennzeichnet, daß der untere Endbereich der Stange zwischen dem kegelstumpfförmigen Bereich (33) und dem Endbereich (35) eine radiale Schulter und eine kegelstumpfförmige Andruckoberfläche (34) aufweist, die geeignet sind, in Anlage auf einen entsprechenden Rand (28, 28a) im Inneren der Manschette (20) zu kommen, wenn der untere Endabschnitt der Stange in die Manschette (20) eingeführt ist.

10. Herauszieh-Vorrichtung nach Anspruch 4, dadurch gekennzeichnet, daß der untere Abschnitt (32) der Stange Rückhalteeinrichtungen der Manschette (20) und Anschlageinrichtungen auf einem Bereich (28, 28a) aufweist, der in das Innere der Manschette (20) vorspringt, wobei die Herauszieh-Vorrichtung in der Lage ist, das Setzen von Blockierungsmanschetten (20) in den Führungsrohren (4) in einem Becken unter Wasser zu erzeugen.

11. Verfahren zum Herausziehen nach einem der Ansprüche 1 bis 3 zum Erzeugen des gleichzeitigen Herausziehens von Blockierungsmanschetten (20) der Anordnung von Führungsrohren (4) eines entfernbaren Endstückes (5) wenigstens eines Kernbrennstabbündels eines Kernreaktors, das unter Wasser in einem Becken angeordnet ist, dadurch gekennzeichnet:
- daß ein Werkzeug, das am Ende der Stange (32) angeordnet ist und eine Mehrzahl von Dornen oder Spindeln und eine Mehrzahl von Futter aufweist, die eine entsprechende Anordnung zur Anordnung der Führungsrohre des Brennstabbündels in dem Becken aufweisen, derart, daß ein jeder der Dorne in eine Blockierungsmanschette eines Führungsrohres einführbar ist, und daß ein jedes der Klemmfutter um den Befestigungsmantel einer Manschette angeordnet wird,
- daß gleichzeitig das Klemmen der Futter des Werkzeugs derart hervorgerufen wird, daß durch Umbiegen nach innen der oder der mehreren Zonen (25a, ... 25f) der Befestigungsmäntel (25), die einen verformten Bereich (29), der radial vorspringt, aufweisen, um die verformten Bereiche (29) der entsprechenden Vertiefungen (22) herauszuziehen und die Befestigungsmäntel zwischen die Futter und die Dorne einzuklemmen,
- daß schließlich die Blockierungsmanschetten (20) durch Ziehen an der Stange (32) in die axiale Richtung der Führungsrohe (4) herausgezogen werden.

12. Herauszieh-Vorrichtung für die Durchführung des Verfahrens nach Anspruch 11, dadurch gekennzeichnet, daß sie aufweist:
- eine mit einer in vertikaler Richtung bewegbaren Hebestange verbundenen Platte,
- eine Anordnung von Dornen, die an der Platte gemäß einem Netz oder Gitter befestigt sind, das die Queranordnung der Führungsrohre wenigstens eines Kernbrennstabbündels wiedergibt, wobei ein jeder der Dorne einen Endbereich aufweist, der eine Form und Abmessungen aufweist, die ihm erlauben, in das Innere einer Blockierungsmanschette (20) eingeführt zu werden, und ein Element (37) aufweist, das am Umfang des Dornes angeordnet ist, mit in radialer Richtung bewegbaren Organe (39), von denen der Endbereich (40), der einen Zangenbacken bildet, in der Lage ist, sich in radialer Richtung und nach innen zwischen einer entklemmten und einer Klemmstellung zu bewegen, um das Umbiegen bzw. Umfalten der verformten Zonen des Mantels (25) einer Blockierungsmanschette und das Spannen oder Klemmen des Mantels (25) zwischen den Backen (40) und einem Bereich (33) des unteren Endes des Dornes, zu erzeugen,
- und eine Steuerungseinrichtung der Anordnung der Organe (39) der Dorne, die von der Platte getragen werden, um sie zwischen ihrer Lösestellung und ihrer Klemmstellung zu bewegen.

## Claims

1. Method for extracting at least one locking sleeve (20) from a guide tube (4) in a demountable end block (5) of a fuel assembly of a nuclear reactor cooled by light water comprising a bundle of parallel fuel rods held inside a framework (9) formed by guide tubes (4), struts (3) and end blocks (5,6) removably fixed onto the ends of the guide tubes (4), by means of an end part (4a) of the guide tube which is radially deformable and has a securing part (17) projecting radially outwards, engaged inside and over a part of the length of an opening (11) passing through the end block (5) and comprising, in its part receiving the guide tube (4), an annular enlargement (16) intended to receive the securing part (17) of the guide tube (4), the radial expansion of the end of the guide tube and the holding of its securing part (17) inside the annular enlargement (16) of the opening (11) of the end block being ensured by a locking sleeve (20) comprising a part for expanding the guide tube (4) and a ferrule (25) for fixing in the end block projecting at the end of the guide tube, in the locked position of the sleeve, inside a part of the opening (11) of the end block which does not receive the guide tube, this part of the opening (11) of the end block comprising at least one radial cavity (22) inside which at least one deformed part (29) of the fixing ferrule (25) is introduced by means of radial deformation of at least one sone of the ferrule (25) coinciding with the cavity (22), so as to ensure fixing of the locking sleeve (20) inside the end block (5), characterised in that, when the assembly is placed under water in a pool,
- a tool (31) located at the end of a pole (32) is lowered into the pool, so as to engage an end portion of the tool in the sleeve (20) and place a clamping chuck (39) of the tool around the fixing ferrule (25) of the sleeve,
- the sectors (39) of the clamping chuck of the tool are tightened by displacement of a sliding jacket (38) in the axial direction of the pole (32) so as to deform, by bending inwards,
- the zone or zones (25a, ... 25f) of the fixing ferrule (25) comprising a radially projecting deformed part (29), so as to extract the deformed part (29) from the corresponding cavity (22) and clamp the fixing ferrule (25) between the sectors (39) and the end part of the tool,
- then the locking sleeve (20) is extracted by pulling the pole (32) in the axial direction of the guide tube (4).

2. Extraction method according to claim 1, characterised in that the zones (25a to 25f) of the ferrule (25) comprising deformed parts (29) consist of cylindrical segments separated from one another by slits (26) arranged in the direction of the generatrices of the ferrule (25).

3. Extraction method according to claim 2, characterised in that the inward folding of the cylindrical segments (25a to 25f) forming the fixing ferrule (25) is performed about a line close to the joining line between the ferrule (25) and the expansion part (24) of the locking sleeve (20).

4. Extraction device for carrying out a process according to any of claims 1 to 3, characterised in that it comprises:
- a pole of considerable length arranged with its axis vertical and suspended at the top from a holding and raising means arranged above a pool inside which the assembly is positioned underwater, the pole comprising a bottom part (32), the end part (33,34,35) of which has a shape and dimensions allowing it to be introduced inside the locking sleeve (20),
- a compartment (37) arranged on the periphery of the bottom part (32) of the pole and comprising members (39) movable in the radial direction, the end part (40) of which forming a gripping jaw is adapted to move radially inwards between an unclamped position and a clamped position, so as to effect folding of the deformed zones of the ferrule (25) and clamping of the ferrule (25) between the jaws (40) and a part (33) of the bottom end (32) of the pole,
- and a jacket (38) for displacing the members (39) between their unclamped position and their clamped position, mounted so as to slide axially over the component (37) and controlled from the top part of the pole, at the upper level of the pool.

5. Extraction device according to claim 4, characterised in that the component (37) is in the form of a cylindrical chuck, the members (39) consisting of segments separated by slits and the operating means (38) consisting of a jacket slidably mounted on the external surface of the component (37).

6. Extraction device according to claim 5, characterised in that the component (37) is mounted so as to slide over a limited distance on the bottom part (32) of the pole, the jacket (38) comprising a bearing part (38a) at its end capable of bearing against one surface (40b) of the gripping jaws (40) so as to move the component (37) downwards by sliding in order to facilitate folding and gripping of the ferrule (25).

7. Extraction device according to claim 4, characterised in that the gripping jaws (40) comprise a tapered end part capable of positioning itself, when the bottom end of the pole is engaged inside the sleeve (20), around the top end of the ferrule (25) inside a widened out opening (23) provided at the end of the opening (11) passing through the end block (5,10) opposite the end for introducing the guide tube (4).

8. Extraction device according to either of claims 6 and 7, characterised in that the end part of the pole capable of being introduced inside the pocking sleeve (20) comprises from the top downwards a frustoconical part (33) and a cylindrical end part (35).

9. Extraction device according to claim 8, characterised in that the bottom end part of the pole comprises, between the frustoconical part (33) and the end part (35), a radial shoulder and a frustoconical bearing surface (34) capable of bearing against a corresponding shoulder (28,28a) inside the sleeve, when the bottom end part of the pole is introduced inside the sleeve (20).

10. Extraction device according to claim 4, characterised in that the bottom part (32) of the pole comprises means for retaining the sleeve (20) and means for bearing against a part (28,28a) projecting inside the sleeve (20), the extraction device being capable of effecting the positioning of locking sleeves (20) inside guide tubes (4), underwater, in a pool.

11. Method of extraction according to any of claims 1 to 3 for simultaneously extracting the locking sleeves (20) from ail the guide tubes (4) of a demountable end block (5) of at least one fuel assembly of a nuclear reactor arranged under water in a pool, characterised in that a tool located at the end of the pole (32) and having a plurality of spindles and a plurality of chucks arranged to correspond to the arrangement of the guide tubes of the assembly, is lowered into the pool, so as to engage each of the spindles in a locking sleeve of a guide tube and place each of the clamping chucks around the fixing ferrule of a sleeve,
- and at the same time the chucks of the tool are tightened so as to deform, by bending inwards, the zone or zones (25a,...25f) of the fixing ferrules (25) comprising a radially projecting deformed part (29), so as to extract the deformed parts (29) from the corresponding cavities (22) and clamp the fixing ferrules between the chucks and the spindles,
- and finally the locking sleeves (20) are extracted by pulling the pole (32) in the axial direction of the guide tubes (4).

12. Extraction device for carrying out the process according to claim 11, characterised in that it comprises:
- a plate connected to a vertically movable lifting pole,
- a set of spindles fixed onto the plate in a grid reproducing the transverse arrangement of the guide tubes of at least one fuel assembly, each of the spindles comprising an end part having a shape and dimensions enabling it to be introduced inside a locking sleeve, and a component (37) arranged on the periphery of the spindle comprising radially movable members (39) the end part of which (40) forming a gripping jaw is capable of moving radially and inwards between an unclamped position and a clamped position, so as to effect folding of the deformed zones of the ferrule (25) of a locking sleeve and gripping of the ferrule (25) between the jaws (40) and a part (33) of the bottom end of the spindle,
- and a means for operating the set of members (39) of the spindles mounted on the plate so as to move them between their clamped position and their unclamped position.
